# EUROPEAN PATENT APPLICATION

(11) **EP 1 118 694 A1**
(43) Date of publication of application: **25.07.2001**
(21) Application number: 99929861.5
(22) Date of filing: 16.07.1999
(51) Int. Cl.: C23C 26/00, C23C 28/00, G03C 3/00

(54) **RESIN COATED STEEL SHEET, CARTRIDGE CAP AND CARTRIDGE BARREL USING IT**

(30) Priority: 17.07.1998 JP 21867898; 18.09.1998 JP 28205498
(71) Applicant: Toyo Kohan Co., Ltd, Tokyo 100-8911 (JP)
(72) Inventor: KOMAI, Masao, Toyo Kohan Co., Ltd., Kudamatsu-shi, Yamaguchi 744-8611 (JP); YOSHIKAWA, Masaki, Toyo Kohan Co., Ltd., Kudamatsu-shi, Yamaguchi 744-8611 (JP); FUJIMOTO, Junichi, Toyo Kohan Co., Ltd., Kudamatsu-shi, Yamaguchi 744-8611 (JP); NISHIMURA, Takao, Toyo Kohan Co., Ltd., Kudamatsu-shi, Yamaguchi 744-8611 (JP); AKIMORI, Yutaka, Toyo Kohan Co., Ltd., Tokyo 100-8911 (JP)
(74) Representative: VOSSIUS & PARTNER
(86) International application number: JP9903832
(87) International publication number: WO0004208

(57) **Abstract**

A purpose of the present invention is to provide a resin coated steel sheet having an excellent corrosion resistance and an excellent processing characteristic by providing a resin coating layer on a surface of a colored layer so as to improve the processing characteristic, the anti-corrosion characteristic and an adhesive characteristic with respect to an organic resin, wherein the resin coated steel sheet can prevent a groundwork of the steel sheet from being exposed in the case of occurring flaws on a surface of the steel sheet while a pressing process is operated. In the resin coated steel sheet according to the present invention, an electric galvanized layer including at least one kind selected from a group of Co, Ni, Mo and others is provided on at least one surface of the steel plate. The steel sheet is electrolyzed anodically/cathodically in acid solution or immersed in solution including nitride ion so as to color the surface of the galvanized steel plate. A resin-coating layer is formed on a colored surface of the galvanized steel plate. A patrone cap and a patrone body portion are made of the resin coated steel plate.

## Description

### INDUSTRIAL FIELD

The invention relates to a steel sheet coated with an organic resin layer having an excellent processing characteristic, an excellent corrosion resistance and an excellent function for preventing light from reflecting, particularly to a resin coated steel sheet used for a patrone cap and a patrone body portion for a film cartridge, the patrone cap and the patrone body portion.

### BACKGROUND OF THE INVENTION

Recently, in a field of office tools, optical devices, electric products and parts of a vehicle, a demand of a black colored steel sheet is increasing in view of an ornamental effect, an improvement of absorption with respect to reflective energy and thermal absorption and a function of preventing light from reflecting. It has been developed a steel sheet of which a surface is colored with black and utilized to various fields since the black steel sheet looks like a high-grade article even if the steel sheet is naked.

As a conventional black colored steel plate, the following prior art are considered.
(1)steel sheet or plating steel sheet of which a surface is coated with a black resin layer mainly including carbon black (Japanese Patent Laid-Open Publication No.56-62996);
(2)Galvanized steel sheet or galvanized-alloy steel sheet treated by electrolyzing (Japanese Patent Laid-Open Publication Nos. 58-151490, 58-151491 and 60-190588) However, regarding the steel sheet treated by a black
color treatment as described in the item (1), an adhesive characteristic between a black resin coating layer and a surface of the steel sheet is weak. When the surface of the steel sheet is damaged by press processing, a groundwork metal of the steel sheet would be exposed. Therefore, the resin coating layer is necessary to be thicken. It would be demerit in view of a production cost. Regarding the steel sheet as described in the item (2), in order to reinforce an corrosion resistance, there is a black colored steel sheet with a surface treatment (Japanese Patent Laid-Open Publication No. 63-60886) wherein a chromate layer and a transparent/translucent organic resin layer is provided on a black colored galvanized steel plate. However, depending a treatment condition of the chromate layer, it would be afraid of deteriorating a black ornament effect. Further, there is no actual suggestion about composition of such a resin layer in view of improving an adhesive characteristic of the resin layer with respect to a galvanized layer.

Particularly, regarding a patrone cap and a patrone body portion used for a film cartridge, a black colored steel sheet has been used. In a conventional art, a steel plate/galvanized steel sheet has a black resin coating layer mainly including carbon black formed on a surface of the steel sheet and the plate is used as a black steel sheet for a patrone cap and a patrone body portion (Japanese Patent Laid-Open Publication No. 56-62996).

However, a black ornament effect is damaged by flaws on a surface of a steel sheet caused by luck of smoothing of the steel sheet when the patrone cap and so on made of the steel sheet is caulked. It would become a problem of reducing the corrosion resistance by exposing the groundwork of the steel plate.

In order to avoid baneful influence caused by flaws occurred at a caulk process, it has been necessary to thicken a black colored coating layer in a conventional art. Normally, a thickness of the black colored coating layer is relatively thick, for example, about 15*µ*m. It would rise a production cost of the patrone cap and the patrone body portion.

### DISCLOSURE OF THE INVENTION

A feature of a resin coated steel sheet according to the present invention as claimed in claim 1 is comprising a galvanized alloy steel sheet and an organic resin layer formed on a surface of the galvanized alloy steel plate, wherein galvanized alloy plating is formed on at least one surface of a steel sheet and treated by an anodic/cathodic treatment in acid solution or an immersion treatment in solution including nitride ion, a surface of a galvanized alloy steel sheet is colored.

A feature of a resin coated steel sheet according to the present invention as claimed in claim 2 is comprising a galvanized alloy steel sheet and an organic resin layer formed on a surface of the galvanized alloy steel plate, wherein galvanized alloy plating is formed on at least one surface of a steel sheet and treated by an anodic/cathodic treatment in acid solution or an immersion treatment in solution including nitride ion, a surface of a galvanized alloy steel sheet is colored and the organic resin layer includes colloidal silica and/or agent for providing a lubricant function at a surface of the organic resin layer.

In a resin coated steel sheet described above, it is preferable that resin formed as the organic resin layer is resin at least selected from a group of urethane system resin, polyester system resin, acrylic system resin and olefin system resin.

In a resin coated steel sheet as described above, it is preferable that resin formed as the organic resin layer is urethane system resin having a pencil hardness of individual resin of H to 6H, a tensile strength of 300 to 500 kg/cm² and an extension ratio of 250 to 450%.

In a resin coated steel sheet as described above, it is preferable that the organic resin layer comprises colloidal silica of which the content is equal or less than 50 wt%, polytetra fluoroethylene and/or polyethylene wax of which the content is equal or less than 20 wt%.

In a resin coated steel sheet as described above, it is preferable that the organic resin layer comprises at least one selected from a group of anti-rust agent of 0.01 to 3 wt%, silane coupling agent of 0.05 to 1 wt% and black pigment of 0.1 to 30 wt%.

A feature of a patrone cap according to the present invention as claimed in claim 7 is utilizing a resin coated steel sheet described above.

A feature of a patrone body portion according to the present invention as claimed in claim 8 is utilizing a resin coated steel sheet as described above.

### BRIEF DESCRIPTION OF THE DRAWINGS

Fig. 1 is a cross sectional view of a resin coated steel sheet according to the present invention.

Fig. 2 is a perspective view of a patrone body portion and a patrone cap according to the present invention.

Fig. 3 is a cross sectional view of another embodiment of a resin coated steel sheet according to the present invention.

### BEST MODE FOR CARRYING OUT THE INVENTION

A patrone cap and a patrone body portion according the present invention is different from a conventional patrone cap and a conventional patrone body portion having a relatively thick black colored coating layer, for example, about 15*µ*m. The resin coating layer according to the present invention has a thickness of 0.1 to 5*µ* m with a sufficient processing characteristic and a sufficient corrosion resistance so that a production cost can be reduced.

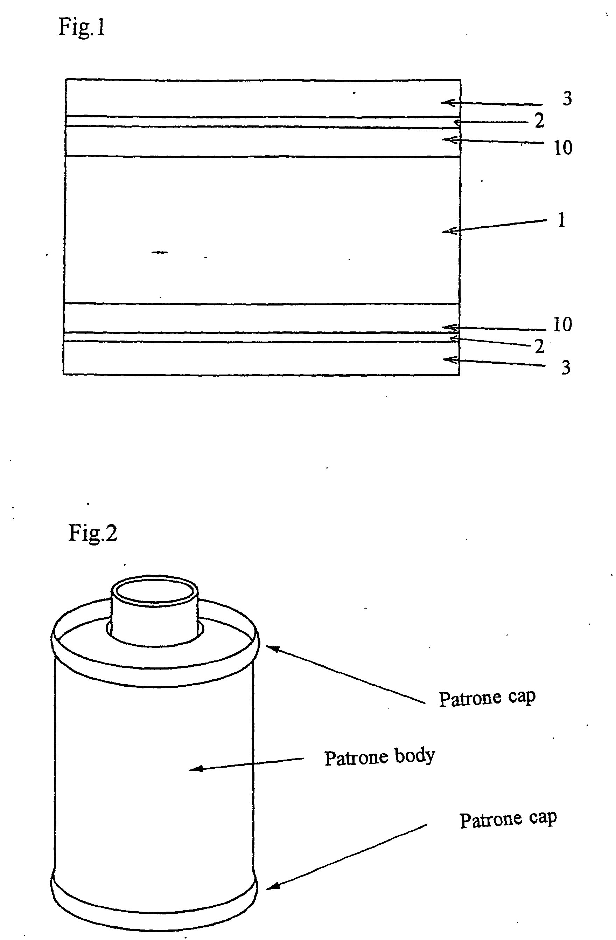

In a resin coated steel sheet according to the present invention as shown in Fig. 1, a galvanized alloy layer 10 is treated by an electrolytic treatment selected from a group of an electrolytic treatment such as an anodic treatment and a cathodic treatment in an acid solution or an immersion treatment in a solution including nitric ion so as to form a colored layer 2 at least one surface of the steel sheet 1. An organic resin layer 3 is formed on a surface of the colored layer 2.

In the present invention, a steel sheet formed with a colored layer 2 is recognized as a steel sheet with a color treatment. A steel sheet with an organic resin layer 3 formed on a surface of the above steel sheet with the color treatment is recognized as a resin coated steel plate.

In galvanized alloy steel sheet according to the present invention, at least one kind of metal such as cobalt, nickel, molybdenum, iron, chromium, manganese and others or metallic oxide is alloyed in a galvanized plating and precipitated and/or dispersed. A plating method may be electric plating or non-electrolytic plating.

For example, an organic resin layer mixed with urethane system resin having high corrosion resistance characteristic and processing characteristic and colloidal silica is mixed with polytetra fluoroethylene and/or polyethylene wax having high lubricity at a blending ratio described above. The organic resin layer is formed on a surface of a color treated steel plate. Thus, it can be prevented a groundwork of the steel sheet from being exposed by flaws occurred at a surface of the steel sheet in a processing. It is preferable to avoid baneful influence in view of an ornament effect.

Regarding the organic resin layer, if urethane system resin with an individual pencil hardness of a resin layer of H to 6H, a tensile force of 300 to 500 kg/cm² and an extension ratio of 250 to 450% is used, it is further preferable since processing characteristics of the organic resin layer can be improved.

If at least one material selected from a group of ammonium chromate of 0.01 to 3 wt%, silane coupling agent of 0.05 to 1 wt%, black pigment of 0.1 to 30 wt% as anti-rust agent, it is preferable since an adhesive characteristic with respect to a black colored plating layer with an corrosion resistance and a black ornamental effect is improved.

In general, a normal cold rolled steel sheet is used as a substrate. A cold rolled steel sheet of which a base is extreme medium/low carbon aluminum killed steel molding is used. Further, extreme low carbon steel with carbon of equal or less than 0.003 wt% and a cold rolled steel sheet made of non-aging steel into which niobium, titanium and others are added are used. Chromium steel including chromium of 3 to 18 wt% or a stainless steel (nickel of 1 to 10 wt% may be included) is preferably used.

A galvanized alloy layer 10 is formed on the above-described steel plate. The steel sheet is color treated by the electrolytic treatment or the immersion treatment so as to form a colored layer 2.

Regarding a galvanized alloy steel plate, although a galvanized alloy steel sheet includes at lease one kind selected from a group of Co, Ni, Mo, Fe, Cr and Mn, it is preferable that an electric galvanized alloy steel sheet includes at least one kind selected from a group of Co, Ni and Mo in view of stability of a plating bath and ornament quality after color treating. Although a galvanized steel sheet may be used, upon comparing the galvanized steel sheet and a galvanized alloy steel plate, the corrosion resistance of the galvanized steel sheet is weak. The amounts of deposit of a galvanized steel sheet should be increased and a colored degree after color treating is insufficient so that an extra attention is needed with respect to its ornament.

If the steel sheet 1 is electric plated in a plating bath mainly including zinc in which water-soluble cobalt, nickel and/or molybdenum are also comprised, it can be obtained a galvanized alloy plating layer 10 in which cobalt, nickel and/or molybdenum is co-deposited or dispersed.

The galvanized alloy steel sheet is electrolyzed anodically in a bath of which the component is as same as that in the plating bath. By forming a layer of which the composite mainly includes at least one kind of hydrate oxide selected from a group of Zn, Co, Ni and Mo on a surface of the galvanized alloy plating steel plate, a surface of the steel sheet becomes dark blue-blacked or blacked so as to form the colored layer 2.

Although the color treatment is treated in a bath of which the composite is as same as that in the plating bath, it may be a color treatment in a bath in which solution is different from that in the plating bath. The color layer 2 of which a surface is colored is formed with composite mainly including hydrate oxide, that is, at least one kind selected from a group of Zn, Co, Ni, Mo, Fe, Cr, Sn and Cu in accordance with an anodic/cathodic treatment in an acid solution including at least one kind selected from a group of Zn ion, Co ion, Ni ion, Mo ion, Fe ion, Cr ion, Sn ion, Cu ion, nitride ion, sulfate ion, phosphoric ion and ammonium ion or an immersion treatment in solution including nitric ion. Although any dark colors are allowable for a colored layer, dark blue-black and black are preferable. Regarding black pigment, a L-value for indicating a black degree is equal or less than 30, preferably equal or less than 20 and more preferably equal or less than 15. If the L-value is equal or less than 30, a function for preventing light from reflecting is improved.

In order to improve an corrosion resistance and an adhesive characteristic with respect to the organic resin layer 3, although a chromate treatment for forming a chromic hydrate oxide coating layer (including an electrolytic chromate treatment) as an upper layer maybe treated, the colored layer is apt to be solved in a chromate treatment solution such as chromic solution and sodium bichromate and it would be afraid of deteriorating an ornament effect.

In the next, the organic resin layer 3 including colloidal silica and/or agent for adding lubricant and having a thickness of 0.1 to 5*µ*m is formed on the above described colored layer 2. If the thickness of the organic resin layer is less than 0.1 *µ*m, its processing characteristic and corrosion resistance are insufficient. If the thickness is more than 5*µ*m, its effect is saturated and a production cost becomes too high. Regarding main composite of the organic resin layer 3, water-resin, that is water soluble or dispersible resin, is more preferable than organic soluble resin in view of an environment problem. Regarding the water-resin, urethane system resin, polyester system resin, acrylic system resin, olefin system resin and others are preferable.

In the case of using water urethane system resin for forming an organic resin layer, urethane resin and urethane resin denatured with acrylic, olefin, polyester, fluorine or others are suitable.

In the case of utilizing for a patrone cap, it is preferable a urethane system resin with an individual pencil hardness of H to 6H, tensile strength of 300 to 500 kg/cm² and extension ratio of 250 to 450%. In such a case, a thickness of the resin can be equal or less than 2*µ*m.

In the case of urethane resin having the above described characteristics, the processing characteristic of the resin coated layer according to the present invention would be improved so that an ornament effect of a patrone cap after processing can be improved. If a pencil-hardness is F or HB softer than H, an abrasion and wear resistance become weaker in the case of utilizing for a patrone cap. If the pencil-hardness is 7H to 9H harder than 6H, the processing characteristic becomes weaker. If the tensile strength of the resin is less than 300 kg/cm² and an extension ratio of the resin is less than 250%, the processing characteristic would become weak. If the tensile strength of the resin is more than 500 kg/cm² and an extension ratio of the resin is more than 450%, its effect is saturated and it is not economic in the view of a production cost.

In the case of water acrylic system resin for the organic resin layer 3, acrylic resin or acrylic resin denatured by urethane, olefin polyester or fluoride are suitable.

In the case of utilizing water polyester system resin for forming the organic resin layer 3, polyester resin or polyester resin denatured by urethane, olefin, acrylic and fluoride are suitable.

In the case of utilizing water olefin system resin for forming the organic resin layer 3, olefin resin or olefin resin denatured urethane, polyester, acrylic or fluoride are suitable.

However, in the case of utilizing these kinds of resin as a patrone cap, the characteristics thereof apt to become inferior to those of urethane system resin and flaws and unevenness of black color of the patrone cap are noticeable. In order to have the processing characteristic as similar as that of urethane system resin, a thickness of the resin-coated layer should be thickened. It is demerit in the view of an economic reason.

In the case of including colloidal silica in the organic resin layer 3, it is preferable that an amount of colloidal silica is equal or less than 50 wt%. The colloidal silica makes influence to the adhesive characteristic among urethane resin and wear resistance. If the content ratio of the colloidal silica is more than 50 wt%, gloss of the coating layer is weakened and a producing cost is increased. It is not preferable.

In the case of including agent for providing a lubricant function with respect to the organic resin layer 3, an amount of the agent is preferably equal or less than 20 wt%.

Regarding the agent for providing a lubricant function, polytetra fluorcethylene and polyethylene wax are preferable. Although the agent for providing a lubricant function is added in the case of processing a patrone cap, an effect caused by the characteristics is saturated if the content ratio is equal or more than 20 wt%. It is not economical.

It is preferable to add an anti-rust agent in order to improve corrosion resistance. Regarding the anti-rust agent, ammonium chromate is preferable. Although the content ratio of ammonium chromate with respect to the organic resin layer 3 may be equal or more than 0.01 wt%, the solution becomes gel and coating the layer is difficult in the case that the additive amount is too much. Further, a surface smoothing characteristic and an adhesive characteristic with respect to a coating layer would be deteriorated so that the processing characteristic of the steel sheet is weakened. Therefore, it is preferable that the content ratio is equal or less than 3 wt%. Instead of ammonium chromate, chromic anhydride and sodium bichromate may be used. However, it should be noted that the treating solution becomes gel.

In order to improve the adhesive characteristic between the colored layer 2 and the organic resin layer 3 and the corrosion resistance, silane coupling agent of equal or more than 0.05 wt% may be added to the organic resin layer, wherein the amount of 0.05 wt% is the minimum level for obtaining an effect. Although silane coupling agent of which the content is more than 0.05 wt% is added, treating solution would become gel and it becomes difficult to form a coating layer if the additive amount is too much. It is preferable that the additive amount is equal or less than 1 wt%.

In order to improve a color ornament, that is, to clear black color, it is preferable to add black pigment into the organic resin layer 3. In such a case, the pigment of which the content is equal or more than 0.1 wt% may be added. The process characteristic is reduced in the case that the additive amount is too much and flaws and unevenness of black color are observed. Therefore, the content ratio of the black pigment is preferably equal or less than 30 wt%. Regarding the black pigment, it may be used carbon black of which a grain diameter is 50 to 200 *µ*m.

In the case of forming the organic resin layer 3, methods generally known such as a roller coating method, a spraying method, a dipping method and others are acceptable as a resin coating method. The resin layer 3 is dried at an atmosphere temperature of 60 to 200 °C. In the case of a low drying temperature such as 60 °C, a long time is necessary. In the case of a high drying temperature such as 200 °C, the treatment is finished for a relatively short time. However, a drying cost would become high. Upon considering such a condition, a galvanized alloy plating steel sheet with high processing characteristics according to the present invention is produced by drying the steel sheet at about 100 °C in view of a drying period and a drying cost.

Resin is coated so as to form an organic resin layer of which a thickness after drying is about 0.1 to 5*µ*m. The organic resin according to the present invention can provide a sufficient lubricant function and endure to be processed hardly in the case of the above described thickness which is thinner than that of a conventional patrone cap and a conventional patrone body portion.

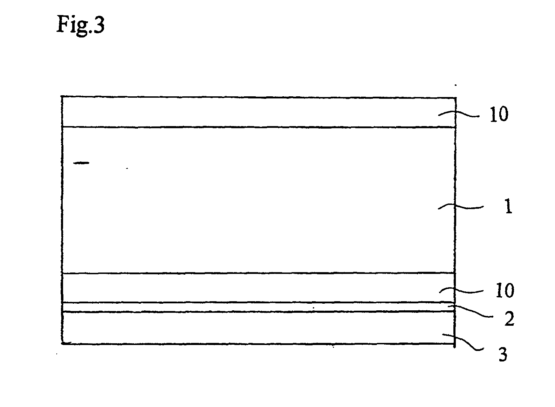

Although Fig. 1 shows one embodiment of a resin coated steel sheet according to the present invention, wherein the both surfaces of the steel sheet is coated with a resin layer 3, respectively. A colored layer 2 and the resin layer 3 may be formed on only one surface of a resin coated steel sheet according to the present invention. In such a case, a galvanized alloy layer is provided at a respective surface of a steel sheet as shown in Fig. 3. The colored layer 2 and the resin-coated layer 3 are formed on the one surface of the both surfaces.

### EMBODIMENTS

The embodiments will be described in detail.

A cold rolling steel sheet (soft steel plate) having a thickness of 0.24 mm annealed and refining rolled is electrolyte degreased in caustic soda solution of 7% and then cleaned with water. Then, the steel sheet is acid cleaned in sulfuric acid of 70g/L and then cleaned with water so as to produce a plated plate. With respect to the plated plate, galvanized alloy plating and color treating are operated under the following three conditions.

### Plating condition 1 (Embodiments 1 to 7 and 22 to 28)

Composition of plating bath:

| | |
|---|---|
| ZnSO₄ · 7H₂O | 250g/L |
| (NH₄)₂SO₄ | 15g/L |
| CoSO₄ · 7H₂O (as Co) | 8g/L |
| Dicyandiamide formaldehyde | 1g/L |
| Temperature of plating bath | 38°C |
| Current density | 25A/dm² |
| Amount of deposit | 10g/m² |

An obtained galvanized steel sheet including Co is successively electrolyzed so as to form a dark blue-black or black colored steel sheet wherein a steel sheet is an anode and an electric amount is 40 coulomb/dm².

### Plating condition 2 (Embodiments 8 to 14, 29 to 31)

Composition of plating bath:

| | |
|---|---|
| ZnSo₄ · 7H₂O | 250g/L |
| (NH₄)₂SO₄ | 15g/L |
| NiSO₄ · 7H₂O (as Ni) | 8g/L |
| Polyvinyl alcohol | 1g/L |
| Temperature of plating bath | 50°C |
| Current density | 25A/dm² |
| Amount of deposit | 15g/m² |

An obtained galvanized steel sheet including Ni is successively electrolyzed so as to form a dark blue-black or black colored steel sheet wherein a steel sheet is an anode and an electric amount is 100 coulomb/dm².

### Plating condition 3 (Embodiments 15 to 21 and 32 to 37)

Composition of plating bath:

| | |
|---|---|
| ZnSO₄ · 7H₂O | 250g/L |
| (NH₄)₂SO₄ | 20g/L |
| CoSO₄ · 7H₂O (as Co) | 8g/L |
| (NH₄)₆Mo · 7H₂O₂₄ · 4H₂O | 0.1g/L |
| Dicyandiamide formaldehyde | 1g/L |
| Temperature of plating bath | 38°C |
| Current density | 25A/dm² |
| Amount of deposit | 20g/m² |

An obtained galvanized steel sheet including Co and Mo is successively electrolyzed so as to form a dark blue-black or black colored steel sheet wherein a steel sheet is an anode and an electric amount is 200 coulomb/dm².

In the next, resin of which composition is as shown in Table 1 and Table 3 is roller coated on a surface of the colored layer and dried at an atmosphere temperature of about 100°C so as to produce a resin coated steel plate. Regarding some test materials, urethane system resin having an individual pencil hardness of H to 6H, tensile strength of 300∼500 kg/cm² and extension ratio of 250 to 450% is used by adding silica, ammonium chromate with agent for providing a smoothing function, silane coupling agent and black pigment into the organic resin. A patrone cap is manufactured by the resin coated steel plate. Although marks of caulking process are recognized at a surface of an organic resin layer through naked eyes, flaws are not observed at a colored groundwork layer. Without damaging its black ornament effect, a patrone cap can be produced with sufficient quality.

Although all the test materials have sufficient characteristics, test materials (Nos. 1, 2, 4, 5, 7, 8, 9, 10, 11, 12, 14, 15, 18, 19, 21) wherein ammonium chromate is added into resin are relatively superior in view of an corrosion resistance. Test materials (Nos. 1, 3, 4, 5, 6, 7, 9, 10, 11, 12, 13, 14, 15, 19, 20, 21) wherein silane coupling agent is added are superior in the view of an adhesive characteristic. Test materials (Nos. 7, 9, 14, 21) wherein black pigment is added are superior in the view of enforcing a black ornament effect. Test material (Nos. 4, 5, 6, 7, 10, 12, 13, 14, 18) made from urethane system resin having an individual pencil-hardness of H to 6H, tensile strength of 300 to 500 kg/cm² and extension ratio of 250 to 450 % are superior in the view of a processing characteristic.

A patrone body portion is manufactured by the resin coated steel sheet according to the present invention. Without damaging its black ornament effect, a patrone body portion can be produced with sufficient quality.

Although all the test materials have sufficient characteristics, test materials (Nos. 22, 23, 25, 26, 28, 29, 30, 31, 32, 36) wherein ammonium chromate is added into resin are superior in the view of an corrosion resistance. Test materials (Nos. 22, 24, 25, 26, 27, 28, 30, 31, 32, 35) wherein silane coupling agent is added are superior in the view of an adhesive characteristic and test materials (Nos. 28, 32, 33, 34, 35, 36) wherein black pigment is added are superior in the view of clearing a black ornament.

Regarding the following characteristics, steel plates according to the present invention are evaluated. In the result of the evaluation, all the steel plates are sufficient since any items of all the steel sheet are scored a rank 4 or more.
1)Processing Characteristic 1
   A steel sheet is bent at an angle of 180, wherein a resin coated surface is located at an exterior side and a radius of a bent portion is 1 mm. Cracking occurred at the bent portion is observed through naked eyes.
2)Processing Characteristic 2
   A patrone cap is produced by caulking processing. An ornament effect of the processed patrone cap including a black degree is observed through naked eyes.
3)Corrosion Resistance
   In accordance with JIS Z 2371, salty spray test is operated for 72 hours so as to check an occurrence of rust through naked eyes.
4)Adhesive Characteristic With Respect To An Organic Resin Layer
   An adhesion test after cutting coated organic resin at a regular intervals of 2 mm is experimented so as to observe a degree of remained organic resin.

### (Evaluation)

Evaluation with respect to each item is divided to 5 ranks, that is, from a rank 1 (poor) to a rank 5 (excellent) . The result of the evaluation is shown in Table 2 and Table 4.

### POSSIBILITY OF USE IN INVENTION

Characteristics according to the present invention are described above so that the following effects can be obtained. A resin coated steel sheet according to the present invention has high corrosion resistance and high processability. By providing an organic resin layer on a surface of a colored layer, the processability characteristic, the corrosion resistance and the adhesive characteristic with respect to an organic resin layer can be improved. A groundwork metal can be prevented from being exposed caused by flaws on a surface of a steel sheet occurred in a processing. A patrone cap according to the present invention maintains an ornament effect without providing flaws at the colored layer as groundwork. A patrone body portion according to the present invention has sufficient quality without damaging an ornament effect.

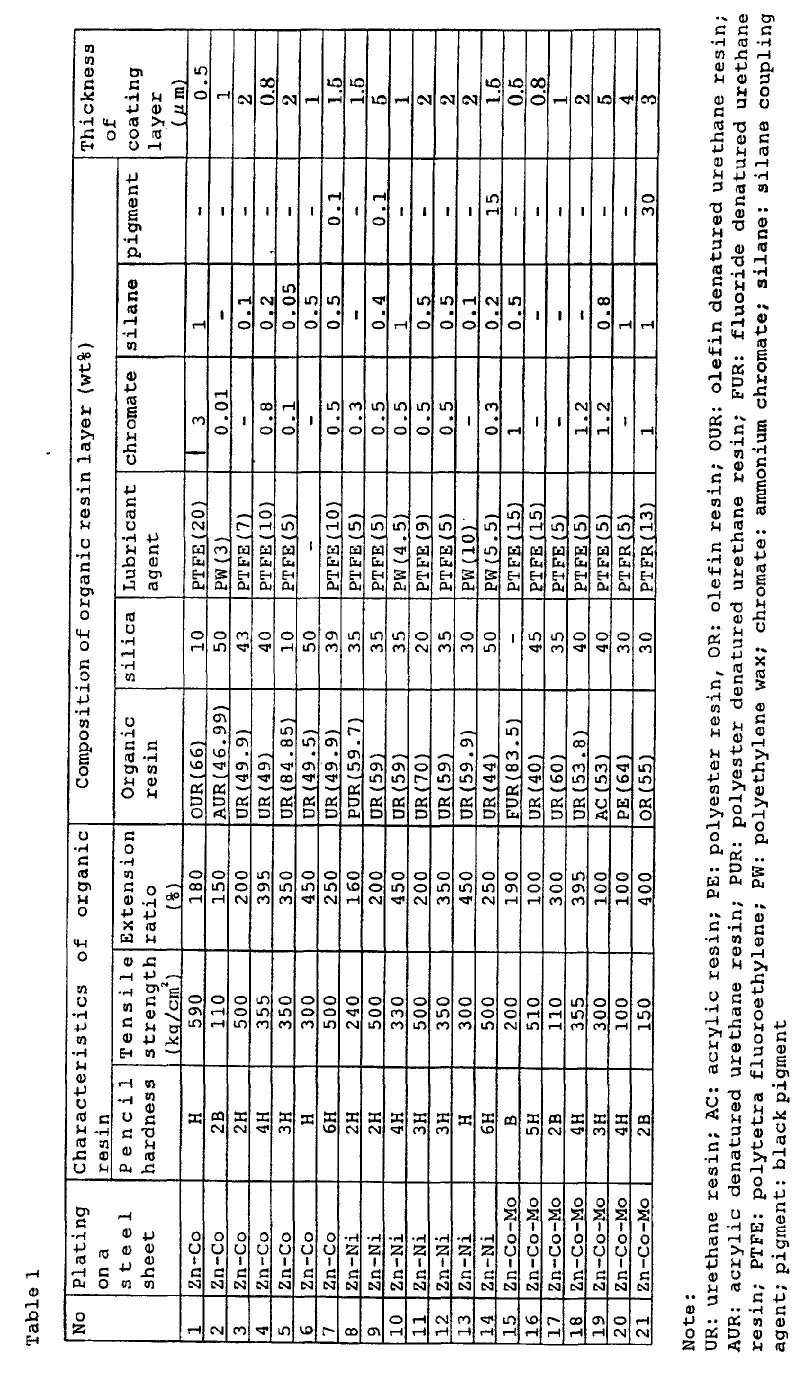

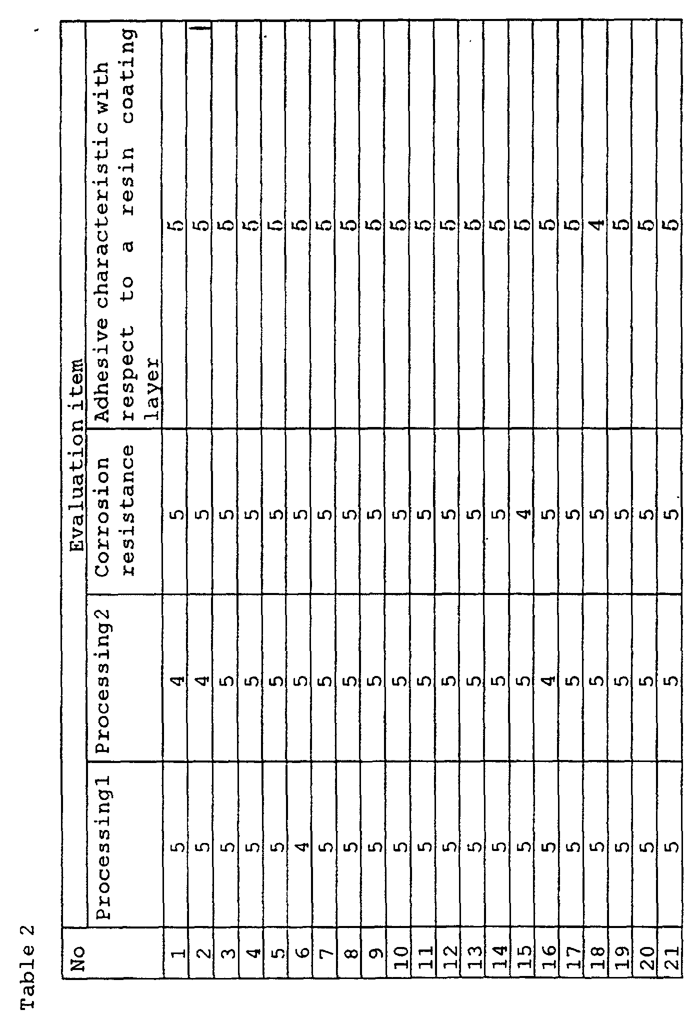

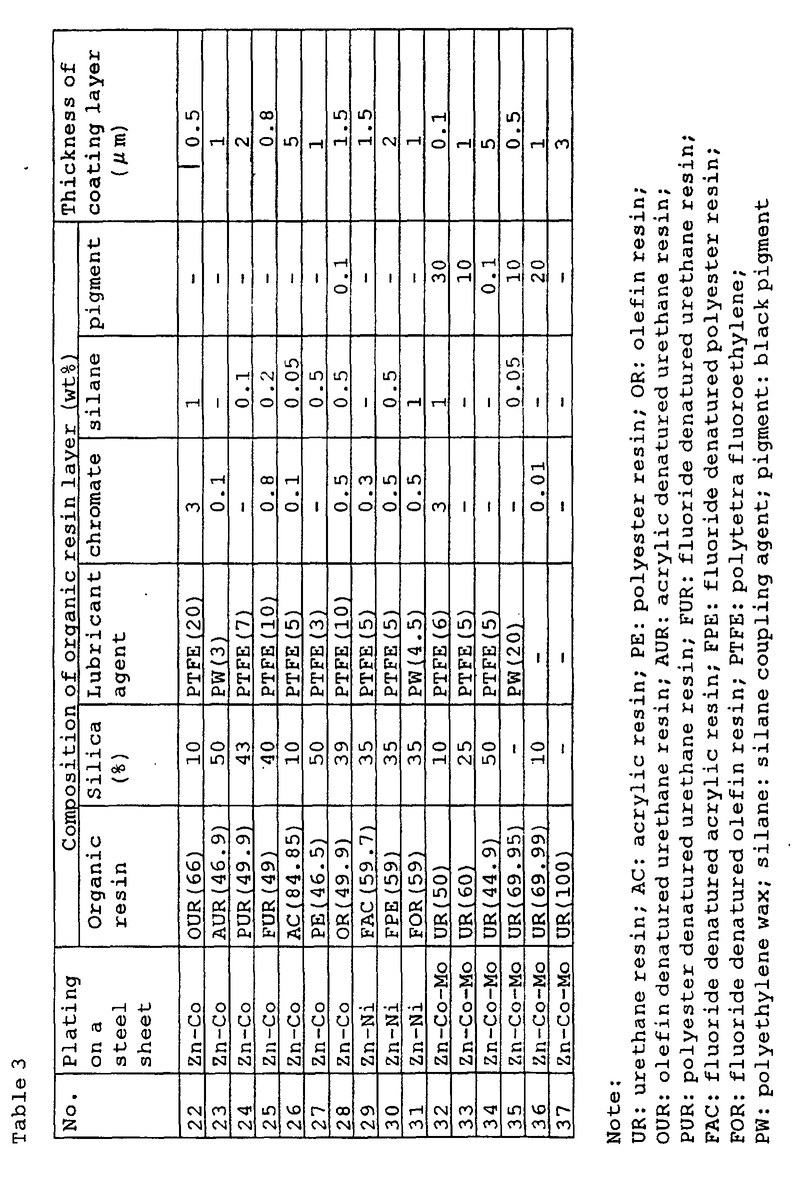

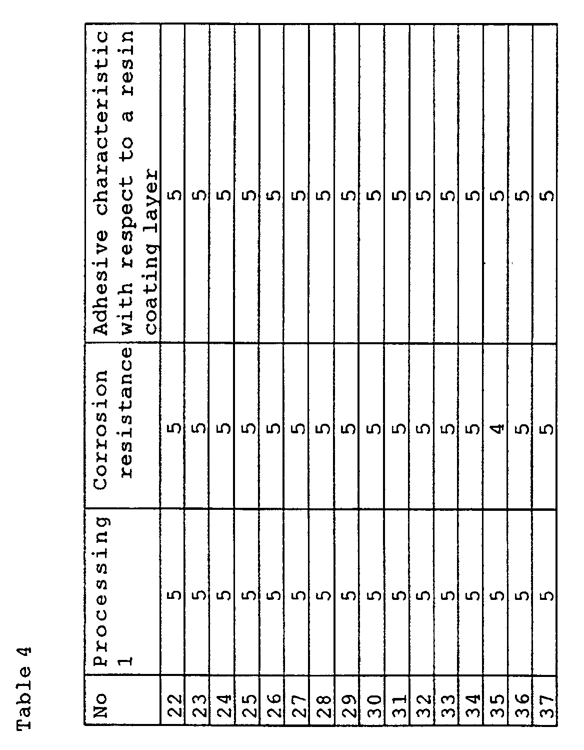

## Claims

1. A resin coated steel sheet comprising a galvanized alloy steel sheet and an organic resin layer formed on a surface of said galvanized alloy steel plate, wherein galvanized alloy plating is formed on at least one surface of a steel sheet and treated by an anodic/cathodic treatment in acid solution or an immersion treatment in solution including nitride ion, a surface of a galvanized alloy steel sheet is colored.

2. A resin coated steel sheet comprising a galvanized alloy steel sheet and an organic resin layer formed on a surface of said galvanized alloy steel plate, wherein galvanized alloy plating is formed on at least one surface of a steel sheet and treated by an anodic/cathodic treatment in acid solution or an immersion treatment in solution including nitride ion, a surface of a galvanized alloy steel sheet is colored and said organic resin layer includes colloidal silica and/or agent for providing a lubricant function at a surface of the organic resin layer.

3. A resin coated steel sheet as claimed in claim 1 or claim 2, wherein resin formed as said organic resin layer is resin at least selected from a group of urethane system resin, polyester system resin, acrylic system resin and olefin system resin.

4. A resin coated steel sheet as claimed in claim 1 or claim 2, wherein resin formed as said organic resin layer is urethane system resin having a pencil hardness of individual resin of H to 6H, a tensile strength of 300 to 500 kg/cm² and an extension ratio of 250 to 450 %.

5. A resin coated steel sheet as claimed in anyone of claims 2 to 4, wherein said organic resin layer comprises colloidal silica of which the content is equal or less than 50 wt%, polytetra fluoroethylene and/or polyethylene wax of which the content is equal or less than 20 wt%.

6. A resin coated steel sheet as claimed in anyone of claims 1 to 5, wherein said organic resin layer comprises at least one selected from a group of anti-rust agent of 0.01 to 3 wt%, silane coupling agent of 0.05 to 1 wt% and black pigment of 0.1 to 30 wt%.

7. A patrone cap made of a resin coated steel sheet as claimed in anyone of claims 1 to 6.

8. A patrone body portion made of a resin coated steel sheet as claimed in anyone of claims 1 to 6.
